# EUROPEAN PATENT SPECIFICATION

(11) **EP 4 369 527 B1**
(45) Date of publication and mention of the grant of the patent: **30.07.2025**
(21) Application number: 22836609.2
(22) Date of filing: 16.05.2022
(51) Int. Cl.: H01R 13/52, H01R 13/74, H02G 3/06, G03B 17/02

(54) **CABLE ASSEMBLY AND CAMERA**
KABELANORDNUNG UND KAMERA
ENSEMBLE CÂBLE ET CAMÉRA

(30) Priority: 09.07.2021 CN 202110779053
(43) Date of publication of application: 15.05.2024
(73) Proprietor: Hangzhou Hikvision Digital Technology Co., Ltd., Hangzhou, Zhejiang 310051 (CN)
(72) Inventor: XIANG, Kun, Hangzhou, Zhejiang 310051 (CN); GUAN, Hongjie, Hangzhou, Zhejiang 310051 (CN); SUN, Mingdong, Hangzhou, Zhejiang 310051 (CN); TIAN, Wei, Hangzhou, Zhejiang 310051 (CN); WU, Yingquan, Hangzhou, Zhejiang 310051 (CN)
(74) Representative: Epping - Hermann - Fischer
(86) International application number: PCT/CN2022/093016
(87) International publication number: WO 2023/279853

(56) References cited:
- EP-A1- 2 465 901
- EP-A1- 3 683 897
- EP-A1- 3 709 461
- CA-A1- 2 962 049
- CN-A- 102 763 296
- CN-A- 108 604 762
- CN-A- 111 435 774
- CN-A- 112 134 067
- CN-A- 113 540 880
- JP-A- 2002 134 191
- JP-A- 2015 201 991
- US-A1- 2009 179 420
- US-A1- 2017 028 684
- US-A1- 2020 169 073
- US-B1- 6 280 208

## Description

The present application claims the priority of a Chinese patent application No. 202110779053.8 filed with the China National Intellectual Property Administration on July 9, 2021 and entitled "Cable Assembly and Camera".

### TECHNICAL FIELD

The present disclosure relates to the technical field of core wire waterproof design, and in particular to a cable assembly and a camera.

### BACKGROUND

This section provides merely background information to which the present disclosure relates and is necessarily prior art.

The market has increasingly higher requirements for waterproof performance of electrical device. Most of the existing waterproof structures utilize methods such as pressing rings or glue filling to fix the core wires on the external mounting base, this fixing method needs to ensure the sealing performance between the pressing ring and the core wire or the quality of glue filling, making the overall processing structure more complex and the waterproof effect unstable.

EP 3 683 897 A1 discloses a waterproof structure. A waterproof structure includes a first seal portion covering around an electric wire to be inserted into a mounting hole of an object to which the electric wire is mounted, the electric wire having a conductor and an insulation covering the conductor, and the first seal portion being elastic and electrically insulative, a housing provided at an end portion of the electric wire, the housing covering the first seal portion, the housing being made of an insulating resin having higher rigidity than the first seal portion and a second seal portion covering around an electric wire being provided contiguously with an end portion of the housing and being elastic and electrically insulative.

CA 2 962 049 A1 discloses a cable gland assembly. A cable gland assembly for attaching a shielded cable to an electronic enclosure includes a cable gland housing enclosing and in electrical contact with exposed cable shielding of the shielded cable and providing an electrically conductive pathway between the cable shielding and the electronic enclosure. The cable gland housing further encloses a shield pressure ring disposed to hold the exposed cable shielding in contact with the cable gland housing, a weather gasket, and an exposed portion of a cable strength member. The cable gland assembly includes environmental molding disposed within the cable gland housing to bond to and fix in place the exposed cable shielding, shield pressure ring, weather gasket, and exposed cable strength member. An outer molding is disposed around the cable gland housing.

EP 2 465 901 A1 discloses a thermoplastic elastomer resin composition and a connector. An object of the present invention is to provide a thermoplastic elastomer resin composition and a connector, which can be processed by mold forming and are excellent in the recycling property. The present invention provides a thermoplastic elastomer resin composition including 100 parts by weight of a base resin containing from 60 to 80 wt% of an acid-modified styrene-based elastomer and from 40 to 20 wt% of a modified polyphenylene ether, and from 0 to 20 parts by weight of a hydrogenated dicyclopentadiene; and a connector using the composition.

US 2020/169073 A1 discloses a integrally produced cable gland. Cable gland for guiding a cable through a wall opening, comprising a body element extending along a longitudinal axis and having an internal cable duct extending along the longitudinal axis, a clamping portion arranged on the body element and having a plurality of clamping elements, a tubular sealing element arranged inside the cable duct and connected to the body element, and a cap nut having an axial opening at one end which is mechanically coupled with the body element, wherein the body element is formed from a first material and the cap nut is formed from a second material, wherein the first material and the second material are injection moulded on to one another.

### SUMMARY

The object of the present disclosure is to at least solve the problem of complex waterproof structures and unstable waterproof effects of cables in the related art. This object is achieved through the following technical solutions:
The present application is set forth in the appended set of claims.

The camera according to the embodiments of the present disclosure, the cable assembly is configured for being assembled on a mounting base, the insertion portion and the connecting portion are integrally provided, and the insertion portion and the core wire are integrally provided, a material hardness of the connecting portion is greater than a material hardness of the insertion portion, and the connecting portion has higher strength, thereby making it easier to maintain relative fixation with the mounting base, and while eliminating the need for the use of fasteners such as locking elements and pressing rings, thus simplifying structure and reducing material costs and installation costs.

### BRIEF DESCRIPTION OF THE DRAWINGS

The accompanying drawings here are incorporated into and constitute a part of this specification, illustrating some embodiments in accordance with the present disclosure, and used together with the specification to explain the principles of the present disclosure.
Figure 1 shows a schematic structural diagram of a camera according to some embodiments of the present disclosure;
Figure 2 shows a longitudinal cross-sectional view of a cable assembly of the camera shown in Figure 1;
Figure 3 shows a perspective view of the cable assembly shown in Figure 1;
Figure 4 shows an exploded perspective view of the cable assembly shown in Figure 1;
Figure 5 shows a longitudinal cross-sectional view of a cable assembly of a camera according to some embodiments of the present disclosure;
Figure 6 shows another structural schematic diagram of a camera according to some embodiments of the present disclosure;
Figure 7 shows a longitudinal cross-sectional view of a cable assembly of the camera shown in Figure 6;
Figure 8 shows a longitudinal cross-sectional view of another cable assembly according to some embodiments of the present disclosure.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The examples described in the following exemplary embodiments do not represent all examples in accordance with the disclosure. Rather, they are merely examples of apparatus and methods consistent with aspects of the invention as detailed in the appended claims.

The terms in the disclosure is for the purpose of describing particular embodiments merely and is not intended to be limiting of the disclosure. Unless otherwise defined, technical terms or scientific terms used in the disclosure shall have the usual meaning understood by a person with ordinary skill in the art to which the disclosure relates. The "first", "second" and similar words used in the specification and claims of the disclosure do not indicate any order, quantity or importance, but are only used to distinguish different components. Likewise, "a" or "an" and similar words do not indicate a quantitative limit, but rather indicate the presence of at least one. "Multiple" or "several" means two or more than two. Unless otherwise indicated, similar terms such as "front", "rear", "lower" and/or "upper" are for convenience of description only and are not intended to limit one position or one spatial orientation. "Including" or "comprising" and other similar words mean that the elements or objects appearing before "includes" or "comprises" cover the elements or objects listed after "includes" or "comprises" and their equivalents, and do not exclude other elements or objects. "Connected to" or "connected with" and other similar words are not limited to physical or mechanical connections, but may include an electrical connection, whether direct or indirect.

The terms in the disclosure is for the purpose of describing particular embodiments merely and is not intended to be limiting of the disclosure. As used in the disclosure and the appended claims, the singular forms "a", "the" and "this" are intended to include the plural forms as well, unless the context clearly dictates otherwise. It will also be understood that the term "and/or" as used herein refers to and includes any and all possible combinations of one or more of the associated listed items.

The present disclosure provides a cable assembly, the cable assembly and camera of the present disclosure will be described in detail below with reference to the accompanying drawings, the following embodiments and features of the implementation may be combined with each other as long as there is no conflict.

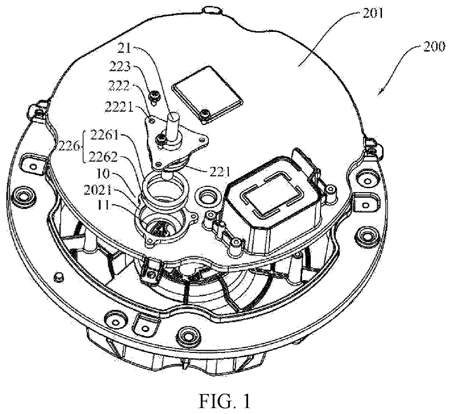

Referring to Figures 1 to 5, a first aspect of embodiments of the present disclosure provides a cable assembly 100, which is applied in an electrical device such as camera, rice cooker, refrigerator, etc., and is used for waterproof processing at core wire and connector of the electrical device. In this embodiment, a camera is used as an example to illustrate the cable assembly 100, the cable assembly 100 is configured to be assembled on a mounting base 10, and includes a core wire 21 and SR (Strain relief) connector 20. Wherein the mounting base 10 is disposed on a housing of the electrical device, and the cable assembly 100 is assembled on the mounting base 10 to achieve installation with the housing of the electrical device. The mounting base 10 may further be referred as a cable base, a cable fixing base, a cable fixing structure, etc.

The SR connector 20 includes an insertion portion 221 and a connecting portion 222, wherein the insertion portion 221 includes a through insertion hole 2215, the core wire 21 is passed through the insertion hole 2215, and both ends of the core wire 21 extend to outside the insertion hole 2215, the core wire 21 and the insertion portion 221 are integrally provided, and the connecting portion 222 is provided outside the insertion portion 221 for connecting with the mounting base 10, the connecting portion 222 and the insertion portion 221 are integrally provided, and a material hardness of the connecting portion 222 is greater than a material hardness of the insertion portion 221, the insertion portion 221 and the connecting portion 222 are integrally provided, so that the SR connector 20 is integrated with the connecting portion 222, thus it can be directly connected to the mounting base 10 through the connecting portion 222, eliminating the need for the use of fasteners such as locking elements and pressing rings, reducing the number of parts, while simplifying the connection structure between the cable assembly 100 and the mounting base 10, so that the connection between the cable assembly 100 and the mounting base 10 is simpler and more convenient, thereby reducing material costs and installation costs. The material hardness of the connecting portion 222 is greater than the material hardness of the insertion portion 221, and the connecting portion 222 has higher strength, thereby making it easier for the connecting portion 222 to be fastened to the mounting base 10 and increasing the reliability and stability of the cable assembly 100.

The core wire 21 is connected to a user's external device. The core wire 21 may include power supply wiring, 485 communication wiring, alarm wiring, audio wiring, optical fiber wiring, network port wiring, etc.

The connecting portion 222 and the insertion portion 221 together constitute a connector body 22 of the SR connector 20, and the specific materials of the connecting portion 222 and the insertion portion 221 are not limited. In this embodiment, the connecting portion 222 and the insertion portion 221 are both made of plastic material. The insertion portion 221 includes a soft colloid, which is bonded with the sealant 224 better and can ensure better sealing performance of the sealant 224, the connecting portion 222 includes a hard colloid, which has good support and can ensure a firm fixation between the cable assembly 100 and the mounting base 10, and the hard colloid can better compress an axial sealing ring 225, and can better control the compression amount of the axial sealing ring 225 to ensure sealing quality and reduce the risk of sealing failure due to aging of the soft colloid. Wherein, the soft colloid is a material with light specific gravity and relatively low surface hardness, which can be made of PVC and other materials, the hard colloid is a material with high specific gravity and relatively high surface hardness, which can be made of ABS, PBT, PA, PP and other materials. Of course, it can be selected according to different usage scenarios and service life requirements.

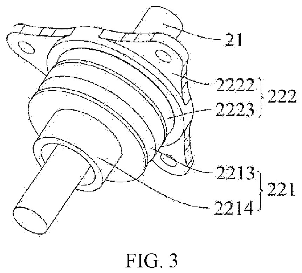

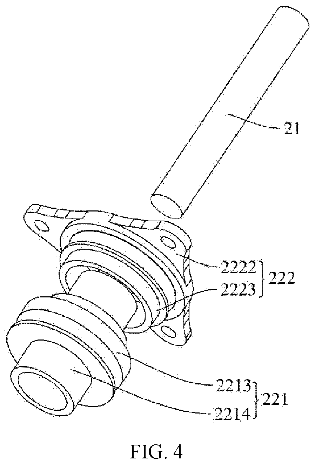

Referring to Figures 3 and 4, in some embodiments of the present disclosure, the insertion portion 221 includes a first sleeve 2213 and a second sleeve 2214 connected to one end of the first sleeve 2213, wherein the second sleeve 2214 protrudes outward in the transverse direction relative to the first sleeve 2213 to form a step surface, and the connecting portion 222 extends to the step surface and fits with the step surface, and the connecting portion 222 fits with the first sleeve 2213 and the second sleeve 2214, in this way, due to the greater hardness of the connecting portion 222, when the core wire 21 is pulled, the connecting portion 222 can withstand the stress from an inner wall of an cable hole 11, thereby improving the bending resistance of the cable assembly 100 and reducing the risk of damage to the cable assembly 100. According to the invention the core wire 21, the connecting portion 222 and the insertion portion 221 are integrally formed by injection molding, the injection molding method may be a secondary injection molding technology or a two-color mold technology.

In some embodiments of the present disclosure, the connecting portion 222 includes a plate-shaped substrate 2222 and an annular flange 2223 disposed on the plate-shaped substrate 2222, and the annular flange 2223 protrudes toward the insertion portion 221, wherein the annular flange 2223 is engaged with the insertion portion 221 in the second sleeve 2214, and the plate-shaped substrate 2222 is connected with the mounting base 10. The shape of the plate-shaped substrate 2222 is not limited, and may be a triangle or other polygon, and the former is used in this embodiment.

Referring to Figures 1 to 5, in some embodiments of the present disclosure, the insertion portion 221 includes a groove 2216, the connecting portion 222 includes a connecting body 2225 and a bonding wall 2226 protruding from the connecting body 2225, the bonding wall 2226 extends into the groove 2216 and bonds with an inner wall of the groove 2216, thereby increasing the contact area between the connecting portion 222 and the insertion portion 221, causing the SR connector 20 more stable. In some embodiments of the present disclosure, the groove 2216 opens toward the first sleeve 2213, which can provide a certain waterproof effect. In some embodiments of the present disclosure, the groove 2216 is an annular groove, and the bonding wall 2226 is an annular wall. By adopting a annular structure, the contact area between the connecting portion 222 and the insertion portion 221 can be larger, and the stability of the SR connector 20 can be better.

In some embodiments of the present disclosure, the thickness of the bonding wall 2226 is greater than or equal to 1.5 mm, which can avoid deformation or even break of the bonding wall caused by the thickness of the bonding wall 2226 being too thin, ensuring the integrated molding rate of the SR connector 20 and the core wire 21.

In some embodiments of the present disclosure, the insertion portion 221 includes an insertion body 2217 and a protrusion portion 2218 protruding from an outer side wall of the insertion body 2217, the insertion body 2217 is provided with an insertion hole 2215, and the protrusion portion 2218 is provided with a groove 2216. In some embodiments of the present disclosure, the protrusion portion 2218 is provided on the outside of the second sleeve 2214, and the size of the protrusion on the protrusion portion 2218 can be easily modified for processing according to the requirements of the depth and width of the groove 2216 disposed on it.

In some embodiments of the present disclosure, the protrusion portion 2218 and the groove 2216 are located at an end of the second sleeve 2214 away from the step surface, which can increase the protruding distance of the bonding wall 2226 on the connecting body 2225, thereby causing the contact area between the connecting portion 222 and the insertion portion 221 larger, causing the SR connector 20 more stable.

According to the invention, the connecting portion 222 includes a longitudinal connecting portion and a transverse connecting portion, the longitudinal connecting portion extends longitudinally and is connected to an outer side wall of the insertion portion 221, the transverse connecting portion extends transversely from the longitudinal connecting portion in a direction away from the core wire 21, the longitudinal connecting portion extends into the cable hole 11 of the mounting base 10 and is connected to the inner wall of the cable hole 11, the transverse connecting portion extends to the outside of the cable hole 11 and covers the edge of the cable hole 11 for connecting with the surface of the mounting base 10. In some embodiments of the present disclosure, the longitudinal connecting portion and the transverse connecting portion together form a connecting body 2225. The longitudinal connecting portion can increase the depth of the connecting portion 222 extending into the cable hole 11 of the mounting base 10, thereby increasing an effective fixed contact area between the connecting portion 222 and the mounting base 10, and preventing the connector body 22 of the SR connector 20 from being removed from the mounting base 10, the transverse connecting portion can cover the edge of the cable hole 11 and play a certain role in waterproofing, dustproofing and sealing.

In some embodiments of the present disclosure, the hole wall of the cable hole 11 is provided with a protrusion 13, and the insertion portion 221 abuts against the protrusion 13 to prevent the insertion portion 221 from passing through the opening on one side of the cable hole 11, which can assist in fixing the cable assembly 100 and the mounting base 10.

In some embodiments of the present disclosure, the transverse connecting portion is provided with multiple screw holes 2221, and the cable assembly 100 includes multiple bolts 223 penetrating the screw holes 2221 to securely connect the SR connector 20 and the mounting base 10, such fixing method has a simple structure and a reliable design, the screw holes 2221 on the mounting base 10 can be directly formed along the mold ejection direction, the mold does not need to be provided with a slider mechanism, so the mold opening cost of the mounting base 10 can be reduced. The cable assembly 100 and the mounting base 10 are connected through the bolts 223 to facilitate repeated disassembly and installation of the cable assembly 100. In a practical application scenario, the cable assembly 100 can be replaced separately during maintenance without replacing the mounting base 10.

In some embodiments of the present disclosure, the cable assembly 100 further includes a sealant 224, one end of the insertion portion 221 is formed with a dispensing groove 2211, the core wire 21 extends out from the dispensing groove 2211, the sealant 224 is arranged in the dispensing groove 2211, and is engaged with the insertion portion 221 and the core wire 21 in a sealing manner, wherein the sealant 224 is configured to seal a structural gap at the junction of the core wire 21 and the insertion portion 221 to improve the waterproof performance of the connecting portion 222 of the core wire 21. In this embodiment, in order to ensure the sealing effect between the core wire 21 and the insertion portion 221, the depth of dispensing is at least 7 mm.

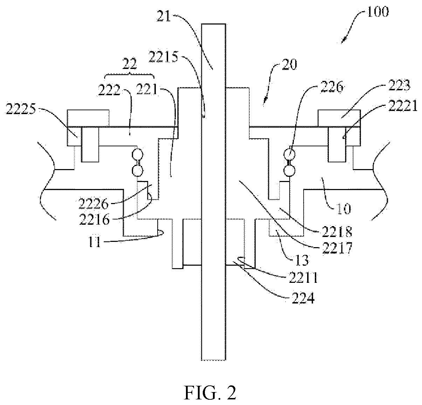

Referring to Figure 2, in some embodiments of the present disclosure, the cable assembly 100 includes a radial sealing ring 226, the radial sealing ring 226 is assembled in the cable hole 11, and the radial sealing ring 226 is clamped between the insertion portion 221 and the inner wall of the cable hole 11, or clamped between the connecting portion 222 and the inner wall of the cable hole 11, the radial sealing ring 226 includes a first sealing portion 2261 and a second sealing portion 2262 distributed in an axial direction of the cable hole 11, and the first sealing portion 2261 is engaged with the inner wall of the cable hole 11 in a sealing manner, the second sealing portion 2262 is engaged with the inner wall of the cable hole 11 in a sealing manner. Under the action of the clamping force of the insertion portion 221 and the inner wall of the cable hole 11 (or the action of the clamping force of the connecting portion 222 and the inner wall of the cable hole 11), the first sealing portion 2261 is compressed and deformed in the radial direction of the cable hole 11, under the action of the clamping force of the insertion portion 221 and the inner wall of the cable hole 11 (or the action of the clamping force of the connecting portion 222 and the inner wall of the cable hole 11), the second sealing portion 2262 is compressed and deformed in the radial direction of the cable hole 11. The radial sealing ring 226 is disposed between the insertion portion 221 and the inner wall of the cable hole 11 or between the connecting portion 222 and the inner wall of the cable hole 11. On the one hand, it can solve the problem of expanding the volume of the connecting portion 222 when using the axial sealing ring 225. On the other hand, by providing the first sealing portion 2261 and the second sealing portion 2262, the SR connector 20 can form a multi-pass sealing structure with the mounting base 10 in the cable hole 11, thereby making up for the problem that the compression amount of the radial sealing ring 226 is uncontrollable when the insertion portion 221 rotates into the cable hole 11. In some other embodiments of the present disclosure, the axial sealing ring 225 and the radial sealing ring 226 may be provided simultaneously to improve the overall waterproof sealing performance of the cable assembly 100.

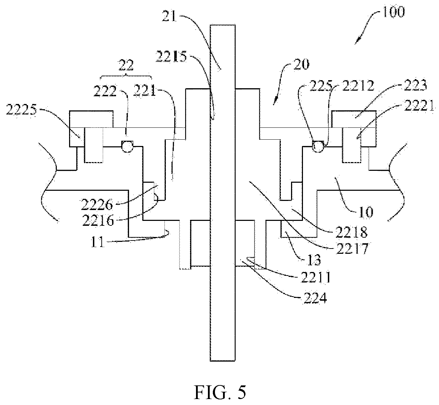

Referring to Figure 5, according to the invention, an axial sealing ring 225 is provided on the lower surface of the transverse connecting portion to seal between the transverse connecting portion and the mounting base 10. The axial sealing ring 225 compresses and deforms along the axial direction of the cable hole 11 under the action of the clamping force between the connecting portion 222 and the mounting base 10, the axial compression amount of the axial sealing ring 225 can be controlled by adjusting the clamping force, therefore, the sealing between the mounting base 10 and the connecting portion 222 can be well achieved, and water can be prevented from entering between the mounting base 10 and the connecting portion 222. The axial sealing ring 225 can be a V-shaped sealing ring, an O-shaped sealing ring, a rectangular sealing ring and other sealing rings, in this embodiment, the axial sealing ring 225 is an O-shaped sealing ring with better static sealing effect, while ensuring sealing effectiveness, the O-ring diameter should be at least 2 mm.

In some embodiments of the present disclosure, the axial sealing ring 225 is close to the core wire 21 relative to the bolt 223, and the axial sealing ring 225 is tightly fixed between the connecting portion 222 the mounting base 10 through the gravity of the SR connector 20 itself and the pressure provided after being connected to the bolt 223, it can be ensured that the axial sealing ring 225 is not easy to come out, thereby improving the sealing quality.

According to the invention, a first recessed portion 2212 is provided on a side surface of the connecting portion 222 facing the mounting base 10, and the axial sealing ring 225 is assembled in the first recessed portion 2212 to prevent the axial sealing ring 225 from being displaced.

According to the invention, a side surface of the mounting base 10 facing the connecting portion 222 is provided with a second recessed portion, and the axial sealing ring 225 is assembled in the second recessed portion. As another example, a first recessed portion 2212 is provided on one side of the connecting portion 222 facing the mounting base 10, a second recessed portion is provided on one side surface of the mounting base 10 facing the connecting portion 222, and the axial sealing ring 225 is assembled in a space enclosed by the first recessed portion 2212 and the second recessed portion, to ensure the position of the axial sealing ring 225 more stable and the waterproof performance is improved.

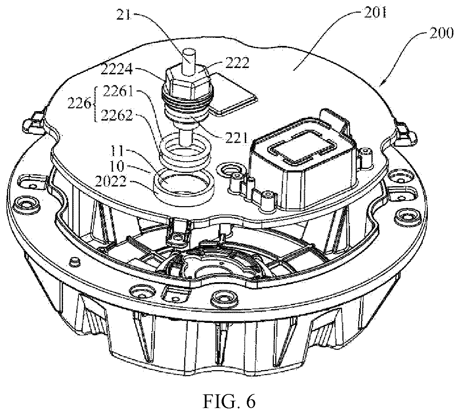

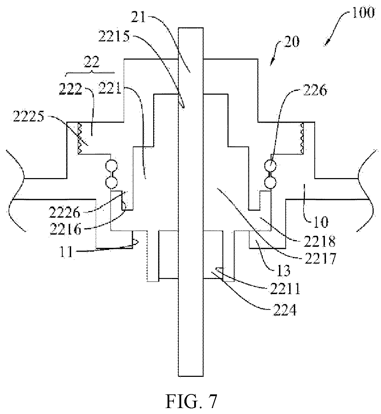

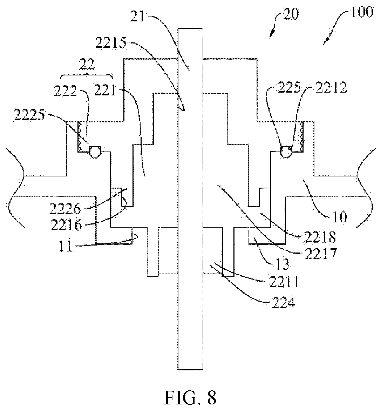

The embodiments shown in Figures 6 to 8 are similar to the embodiments shown in Figures 1 to 5, compared to the embodiments shown in Figures 1 to 5, the main differences of the embodiments shown in Figures 6 to 8 are as follows:
The cable assembly 100 and the mounting base 10 are fixed in different ways, one of the connecting portion 222 and the mounting base 10 is provided with external threads, and the other is provided with internal threads, the internal threads are matched with the external threads to fix the cable assembly 100 and the mounting base 10. Specifically, the mounting base 10 may include a first circular sleeve protruding from the outer edge of the cable hole 11 toward the connecting portion 222, and the connecting portion 222 includes a second circular sleeve extending toward the mounting base 10, in some embodiments of the disclosure, an outer wall of the first circular sleeve is provided with external threads, an inner wall of the second circular sleeve is provided with internal threads, and the internal threads are matched with the external threads. In other embodiments of the present disclosure, the inner wall of the first circular sleeve is provided with internal threads, the outer wall of the second circular sleeve is provided with external threads, and the internal threads are matched with the external threads. The connecting portion 222 is threadedly connected to the mounting base 10, which can save the use of fixed components and reduce the number of parts.

Referring to Figures 1 and 6, a second aspect of the embodiments of the present disclosure provides a camera 200, which includes a mounting base 10 and a cable assembly 100, wherein the camera includes a housing 201, and the mounting base 10 is provided in the housing 201.

In the embodiment shown in Figure 1, the housing 201 includes a flange 2021 provided around the cable hole 11, the flange 2021 is provided with a first connecting hole, the threaded hole is a second connecting hole, and the first connecting hole and the second connecting hole are provided for the bolts 223 to pass through, so as to fix the cable assembly 100 and the housing 201. The purpose of providing the flange 2021 is to reduce the area of the upper end surface of the flange 2021, which is beneficial for improving the flatness of the upper end surface of the flange 2021 during the processing, making it more tightly bonded with the plate-shaped substrate 2222, and providing better waterproof performance.

In the embodiment shown in Figure 6, the connecting portion 222 is provided with external threads, and the housing 201 includes an annular protrusion portion 2022 arranged around the cable hole 11, the inner wall of the annular protrusion portion 2022 is provided with internal threads, the internal threads are matched with the external threads to fix the cable assembly 100 and the housing 201. The connecting portion 222 further includes a handle 2224, the handle 2224 is provided to cause the cable assembly 100 more labor-saving when it is rotated and installed into the cable hole 11, in some embodiments of the present disclosure, the handle 2224 has an external hexagonal structure, which can be matched with tools such as a wrench to assist in installation and facilitate the application of installation force.

A camera 200 is provided according to an embodiment of the present disclosure, its cable assembly 100 is configured to be assembled on the mounting base 10, the insertion portion 221 and the connecting portion 222 of the cable assembly 100 are integrally provided, and the insertion portion 221 and the core wire 21 are integrally provided, the material hardness of the connecting portion 222 is greater than that of the insertion portion 221, and the connecting portion 222 has higher strength, thereby making it easier to maintain relative fixation with the mounting base 10, and while eliminating the need for the use of fasteners such as locking elements and pressing rings, thus simplifying structure and reducing material costs and installation costs.

It is to be understood that the present disclosure is not limited to the precise construction described above and illustrated in the accompanying drawings, and that various modifications and changes may be made without departing from the scope thereof. The scope of the disclosure is limited only by the appended claims.

## Claims

1. A camera, wherein the camera comprises a housing, a mounting base (10) provided on the housing, and a cable assembly (100) for being assembled on the mounting base (10), wherein the cable assembly (100) comprises:
a core wire (21); and
a strain relief, SR, connector (20), wherein the SR connector (20) comprises an insertion portion (221) and a connecting portion (222), wherein the core wire (21), the insertion portion (221) and the connecting portion (222) are integrally formed by injection molding, the core wire (21) and the insertion portion (221) are integrally provided, wherein the core wire (21) is located in a through insertion hole (2215) comprised in the insertion portion (221) and both ends of the core wire (21) extend to outside the insertion hole (2215), the connecting portion (222) is provided outside the insertion portion (221) for connecting with the mounting base (10), the connecting portion (222) and the insertion portion (221) are integrally provided, and a material hardness of the connecting portion (222) is greater than a material hardness of the insertion portion (221),
wherein the connecting portion (222) comprises a longitudinal connecting portion and a transverse connecting portion, the longitudinal connecting portion extends longitudinally and is connected to an outer side wall of the insertion portion (221), and the transverse connecting portion extends transversely from the longitudinal connecting portion in a direction away from the core wire (21), the longitudinal connecting portion extends into a cable hole (11) of the mounting base (10) and is connected to an inner wall of the cable hole (11), the transverse connecting portion extends to outside the cable hole (11), covers an edge of the cable hole (11), and is connected with a surface of the mounting base (10),
the cable assembly (100) comprises an axial sealing ring (225), and the axial sealing ring (225)is provided on a lower surface of the transverse connecting portion and is disposed between the transverse connecting portion and the mounting base (10) in a sealing manner,
wherein a first recessed portion (2212) is provided on a side surface of the connecting portion (222) facing the mounting base (10), and the axial sealing ring (225) is assembled in the first recessed portion (2212); a second recessed portion is provided on a side surface of the mounting base (10) facing the connecting portion (222), and the axial sealing ring (225) is assembled in the second recessed portion.

2. The camera according to claim 1, wherein the insertion portion (221) comprises a soft colloid, and the connecting portion (222) comprises a hard colloid.

3. The camera according to claim 1, wherein the insertion portion (221) comprises a groove (2216), the connecting portion (222) comprises a connecting body (2225) and a bonding wall (2226) protruding from the connecting body (2225), the bonding wall (2226) extending into the groove (2216), and bonding with an inner wall of the groove (2216).

4. The camera according to claim 3, wherein the insertion portion (221) comprises an insertion body (2217) and a protrusion portion (2218) protruding from an outer wall of the insertion body (2217), and the insertion body (2217) is provided with the insertion hole (2215), the protrusion portion (2218) is provided with the groove (2216); preferably, the groove (2216) is an annular groove, and the bonding wall (2226) is an annular wall.

5. The camera according to claim 4, wherein the insertion portion (221) comprises a first sleeve (2213) and a second sleeve (2214) connected to one end of the first sleeve (2213), the second sleeve (2214) protrudes outward in a transverse direction relative to the first sleeve (2213) to form a step surface, the connecting portion (222) extends to the step surface and fits with the step surface, and the connecting portion (222) fits with the first sleeve (2213) and the second sleeve (2214).

6. The camera according to claim 5, wherein the protrusion portion (2218) and the groove (2216) are provided at an end of the second sleeve (2214) away from the step surface.

7. The camera according to claim 5, wherein the connecting portion (222) comprises a plate-shaped substrate (2222) and an annular flange (2223) connected to the plate-shaped substrate (2222) and protruding toward the insertion portion (221), the annular flange (2223) is engaged with the insertion portion (221) in the second sleeve (2214), and the plate-shaped substrate (2222) is connected with the mounting base (10).

8. The camera according to claim 1, wherein one of the connecting portion (222) and the mounting base (10) is provided with external threads, and the other is provided with internal threads, and the internal threads are matched with the external threads to fix the SR connector (20) and the mounting base (10).

9. The camera according to claim 1, wherein the transverse connecting portion is provided with multiple screw holes (2221), the cable assembly (100) comprises multiple bolts (2223), and the bolts (2223) penetrate the screw holes (2221) and are fixed to the mounting base (10), to firmly connect the SR connector (20) and the mounting base (10).

10. The camera according to claim 1, wherein a hole wall of the cable hole (11) of the mounting base (10) is provided with a protrusion (13), and the insertion portion (221) abuts against the protrusion (13).

## Patentansprüche

1. Kamera, wobei die Kamera ein Gehäuse, eine Montagebasis (10), die am Gehäuse vorgesehen ist, und eine Kabelanordnung (100) aufweist, um an der Montagebasis (10) montiert zu werden, wobei die Kabelanordnung (100) aufweist:
einen Kerndraht (21); und
einen Zugentlastungs-, SR-, Verbinder (20), wobei der SR-Verbinder (20) einen Einführabschnitt (221) und einen Verbindungsabschnitt (222) aufweist, wobei der Kerndraht (21), der Einführabschnitt (221) und der Verbindungsabschnitt (222) durch Spritzgießen einstückig ausgebildet sind, der Kerndraht (21) und der Einführabschnitt (221) einstückig vorgesehen sind, wobei sich der Kerndraht (21) in einer durchgehenden Einführöffnung (2215) befindet, die im Einführabschnitt (221) enthalten ist, und beide Enden des Kerndrahts (21) sich nach außerhalb der Einführöffnung (2215) erstrecken, wobei der Verbindungsabschnitt (222) außerhalb des Einführabschnitts (221) vorgesehen ist, um mit der Montagebasis (10) verbunden zu werden, wobei der Verbindungsabschnitt (222) und der Einführabschnitt (221) einstückig vorgesehen sind und eine Materialhärte des Verbindungsabschnitts (222) größer ist als eine Materialhärte des Einführabschnitts (221),
wobei der Verbindungsabschnitt (222) einen Längsverbindungsabschnitt und einen Querverbindungsabschnitt aufweist, der Längsverbindungsabschnitt sich in Längsrichtung erstreckt und mit einer Außenseitenwand des Einführabschnitts (221) verbunden ist, und der Querverbindungsabschnitt sich vom Längsverbindungsabschnitt ausgehend quer in einer vom Kerndraht (21) wegführenden Richtung erstreckt, der Längsverbindungsabschnitt sich in eine Kabelöffnung (11) der Montagebasis (10) erstreckt und mit einer Innenwand der Kabelöffnung (11) verbunden ist, der Querverbindungsabschnitt sich nach außerhalb der Kabelöffnung (11) erstreckt, einen Rand der Kabelöffnung (11) bedeckt und mit einer Oberfläche der Montagebasis (10) verbunden ist,
wobei die Kabelanordnung (100) einen Axialdichtring (225) aufweist und der Axialdichtring (225) an einer Unterseite des Querverbindungsabschnitts vorgesehen und in abdichtender Weise zwischen dem Querverbindungsabschnitt und der Montagebasis (10) angeordnet ist,
wobei ein erster ausgesparter Abschnitt (2212) an einer der Montagebasis (10) zugewandten Seitenfläche des Verbindungsabschnitts (222) vorgesehen und der Axialdichtring (225) in dem ersten ausgesparten Abschnitt (2212) montiert ist; ein zweiter ausgesparter Abschnitt an einer dem Verbindungsabschnitt (222) zugewandten Seitenfläche der Montagebasis (10) vorgesehen und der Axialdichtring (225) in dem zweiten ausgesparten Abschnitt montiert ist.

2. Kamera nach Anspruch 1, wobei der Einführabschnitt (221) ein weiches Kolloid und der Verbindungsabschnitt (222) ein hartes Kolloid aufweist.

3. Kamera nach Anspruch 1, wobei der Einführabschnitt (221) eine Nut (2216) aufweist, der Verbindungsabschnitt (222) einen Verbindungskörper (2225) und eine Anbindungswand (2226) aufweist, die vom Verbindungskörper (2225) absteht, und die Anbindungswand (2226) sich in die Nut (2216) erstreckt und mit einer Innenwand der Nut (2216) verbunden ist.

4. Kamera nach Anspruch 3, wobei der Einführabschnitt (221) einen Einführkörper (2217) und einen Vorsprungabschnitt (2218) aufweist, der von einer Außenwand des Einführkörpers (2217) absteht, und der Einführkörper (2217) mit der Einführöffnung (2215) und der Vorsprungabschnitt (2218) mit der Nut (2216) versehen ist; vorzugsweise wobei die Nut (2216) eine ringförmige Nut und die Anbindungswand (2226) eine ringförmige Wand ist.

5. Kamera nach Anspruch 4, wobei der Einführabschnitt (221) eine erste Manschette (2213) und eine zweite Manschette (2214) aufweist, die mit einem Ende der ersten Manschette (2213) verbunden ist, die zweite Manschette (2214) nach außen in einer Querrichtung relativ zur ersten Manschette (2213) absteht, um eine Stufenfläche zu bilden, der Verbindungsabschnitt (222) sich zur Stufenfläche erstreckt und mit der Stufenfläche zusammenpasst, und der Verbindungsabschnitt (222) mit der ersten Manschette (2213) und der zweiten Manschette (2214) zusammenpasst.

6. Kamera nach Anspruch 5, wobei der Vorsprungabschnitt (2218) und die Nut (2216) an einem von der Stufenfläche entfernten Ende der zweiten Manschette (2214) vorgesehen sind.

7. Kamera nach Anspruch 5, wobei der Verbindungsabschnitt (222) einen plattenförmigen Trägerkörper (2222) und einen ringförmigen Flansch (2223) aufweist, der mit dem plattenförmigen Trägerkörper (2222) verbunden ist und zum Einführabschnitt (221) hin absteht, der ringförmige Flansch (2223) mit dem Einführabschnitt (221) in der zweiten Manschette (2214) in Eingriff steht und der plattenförmige Trägerkörper (2222) mit der Montagebasis (10) verbunden ist.

8. Kamera nach Anspruch 1, wobei der Verbindungsabschnitt (222) oder die Montagebasis (10) mit einem Außengewinde versehen und das jeweils andere Element mit einem Innengewinde versehen ist, und das Innengewinde mit dem Außengewinde übereinstimmt, um den SR-Verbinder (20) und die Montagebasis (10) zu befestigen.

9. Kamera nach Anspruch 1, wobei der Querverbindungsabschnitt mit mehreren Schraubenöffnungen (2221) versehen ist, die Kabelanordnung (100) mehrere Schrauben (2223) aufweist und die Schrauben (2223) die Schraubenöffnungen (2221) durchdringen und an der Montagebasis (10) befestigt sind, um den SR-Verbinder (20) und die Montagebasis (10) fest zu verbinden.

10. Kamera nach Anspruch 1, wobei eine Lochwand der Kabelöffnung (11) der Montagebasis (10) mit einem Vorsprung (13) versehen ist und der Einführabschnitt (221) am Vorsprung (13) anliegt.

## Revendications

1. Caméra comprenant un boîtier, une base de montage (10) prévue sur le boîtier et un ensemble de câble (100) destiné à être monté sur la base de montage (10), l'ensemble de câble (100) comprenant :
un fil d'âme (21) ; et
un connecteur SR (20) de décharge de traction, le connecteur SR (20) comprenant une section d'insertion (221) et une section de connexion (222), le fil d'âme (21), la section d'insertion (221) et la section de connexion (222) étant formés d'un seul tenant par moulage par injection, le fil d'âme (21) et la section d'insertion (221) étant prévus d'un seul tenant, le fil d'âme (21) étant situé dans une ouverture d'insertion continue (2215) prévue dans la section d'insertion (221), et les deux extrémités du fil d'âme (21) s'étendant à l'extérieur de l'ouverture d'insertion (2215), la section de connexion (222) étant prévue à l'extérieur de la section d'insertion (221) pour être connectée à la base de montage (10), la section de connexion (222) et la section d'insertion (221) étant prévues d'un seul tenant et la dureté du matériau de la section de connexion (222) étant supérieure à la dureté du matériau de la section d'insertion (221),
la section de connexion (222) comprenant une section de connexion longitudinale et une section de connexion transversale, la section de connexion longitudinale s'étendant dans la direction longitudinale et étant reliée à une paroi extérieure de la section d'insertion (221), et la section de connexion transversale s'étendant transversalement à partir de la section de connexion longitudinale dans une direction s'éloignant du fil d'âme (21), la section de connexion longitudinale s'étendant dans une ouverture de câble (11) de la base de montage (10) et étant reliée à une paroi intérieure de l'ouverture de câble (11), la section de connexion transversale s'étendant vers l'extérieur de l'ouverture de câble (11), recouvrant un bord de l'ouverture de câble (11) et étant reliée à une surface de la base de montage (10),
l'ensemble de câble (100) comportant une bague d'étanchéité axiale (225) prévue sur une face inférieure de la section de connexion transversale et étant disposée de manière étanche entre la section de connexion transversale et la base de montage (10),
sachant qu'une première section évidée (2212) est prévue sur une surface latérale de la section de connexion (222) tournée vers la base de montage (10) et la bague d'étanchéité axiale (225) est montée dans la première section évidée (2212) ; une deuxième section évidée est prévue sur une surface latérale de la base de montage (10) tournée vers la section de connexion (222) et la bague d'étanchéité axiale (225) est montée dans la deuxième section évidée.

2. La caméra selon la revendication 1, sachant que la section d'insertion (221) comprend un colloïde souple et la section de connexion (222) comprend un colloïde dur.

3. La caméra selon la revendication 1, sachant que la section d'insertion (221) comprend une rainure (2216), la section de connexion (222) comprend un corps de connexion (2225) et une paroi de liaison (2226) qui fait saillie à partir du corps de connexion (2225), la paroi de liaison (2226) s'étendant dans la rainure (2216) et étant reliée à une paroi intérieure de la rainure (2216).

4. La caméra selon la revendication 3, sachant que la section d'insertion (221) comprend un corps d'insertion (2217) et une section en saillie (2218) qui fait saillie à partir d'une paroi extérieure du corps d'insertion (2217), et le corps d'insertion (2217) est pourvu de l'ouverture d'insertion (2215) et la section en saillie (2218) est pourvue de la rainure (2216) ; de préférence, la rainure (2216) est une rainure annulaire et la paroi de liaison (2226) est une paroi annulaire.

5. La caméra selon la revendication 4, sachant que la section d'insertion (221) comprend un premier manchon (2213) et un deuxième manchon (2214) relié à une extrémité du premier manchon (2213), le deuxième manchon (2214) faisant saillie vers l'extérieur dans une direction transversale par rapport au premier manchon (2213) pour former une surface en gradins, la section de connexion (222) s'étendant vers la surface en gradins et s'adaptant à celle-ci, et la section de connexion (222) s'adaptant au premier manchon (2213) et au deuxième manchon (2214).

6. La caméra selon la revendication 5, sachant que la section en saillie (2218) et la rainure (2216) sont prévues à une extrémité du deuxième manchon (2214) éloignée de la surface en gradin.

7. La caméra selon la revendication 5, sachant que la section de connexion (222) comprend un corps de support en forme de plaque (2222) et une bride annulaire (2223) reliée au corps de support en forme de plaque (2222) et faisant saillie vers la section d'insertion (221), la bride annulaire (2223) étant en prise avec la section d'insertion (221) dans le deuxième manchon (2214) et le corps de support en forme de plaque (2222) étant relié à la base de montage (10).

8. La caméra selon la revendication 1, sachant que l'une de la section de connexion (222) et de la base de montage (10) est pourvue d'un filetage extérieur et l'autre est pourvu d'un filetage intérieur, le filetage intérieur correspondant au filetage extérieur afin de fixer le connecteur SR (20) et la base de montage (10).

9. La caméra selon la revendication 1, sachant que la section de connexion transversale est pourvue de plusieurs ouvertures de vis (2221), l'ensemble de câble (100) comprend plusieurs vis (2223) et les vis (2223) traversent les ouvertures de vis (2221) et sont fixées à la base de montage (10) afin de relier solidement le connecteur SR (20) et la base de montage (10).

10. La caméra selon la revendication 1, sachant qu'une paroi perforée de l'ouverture de câble (11) de la base de montage (10) est pourvue d'une saillie (13) et la section d'insertion (221) est en butée contre la saillie (13).
